# EUROPEAN PATENT APPLICATION

(11) **EP 4 092 614 A1**
(43) Date of publication of application: **23.11.2022**
(21) Application number: 21175476.7
(22) Date of filing: 21.05.2021
(51) Int. Cl.: G06T 5/00, G06T 5/20, G06T 5/50, G06T 7/00

(54) **DATA PROCESSING DEVICE AND METHOD, CHARGED PARTICLE ASSESSMENT SYSTEM AND METHOD**

(71) Applicant: ASML Netherlands B.V., 5500 AH Veldhoven (NL)
(72) Inventor: WIELAND, Marco, Jan-Jaco, 5500 AH Veldhoven (NL); KUIPER, Vincent, Sylvester, 5500 AH Veldhoven (NL)
(74) Representative: ASML Netherlands B.V.

(57) **Abstract**

A data processing device for detecting defects in sample images generated by a charged particle assessment system, the device comprising: an input module, a filter module, a reference image module and a comparator. The input module is configured to receive a sample image from the charged particle assessment system. The filter module is configured to apply a filter to the sample image to generate a filtered sample image. The reference image module is configured to provide a reference image based on one or more source images. The comparator is configured to compare the filtered sample image to the reference image so as to detect defects in the sample image.

## Description

### FIELD

The embodiments provided herein generally relate to data processing devices and methods, especially for use with or in charged particle assessment systems and methods of operating charged particle assessment systems.

### BACKGROUND

When manufacturing semiconductor integrated circuit (IC) chips, undesired pattern defects, as a consequence of, for example, optical effects and incidental particles, inevitably occur on a substrate (i.e. wafer) or a mask during the fabrication processes, thereby reducing the yield. Monitoring the extent of the undesired pattern defects is therefore an important process in the manufacture of IC chips. More generally, the inspection and/or measurement of a surface of a substrate, or other object/material, is an important process during and/or after its manufacture.

Pattern inspection apparatuses with a charged particle beam have been used to inspect objects, which may be referred to as samples, for example to detect pattern defects. These apparatuses typically use electron microscopy techniques, such as a scanning electron microscope (SEM). In a SEM, a primary electron beam of electrons at a relatively high energy is targeted with a final deceleration step in order to land on a sample at a relatively low landing energy. The beam of electrons is focused as a probing spot on the sample. The interactions between the material structure at the probing spot and the landing electrons from the beam of electrons cause signal electrons to be emitted from the surface, such as secondary electrons, backscattered electrons or Auger electrons. The signal electrons may be emitted from the material structure of the sample. By scanning the primary electron beam as the probing spot over the sample surface, signal electrons can be emitted across the surface of the sample. By collecting these emitted signal electrons from the sample surface, a pattern inspection apparatus may obtain an image representing characteristics of the material structure of the surface of the sample.

When a pattern inspection apparatus is used to detect defects on samples at a high throughput, a very large amount of image data is generated and must be processed to detect defects. In particular it is desirable to reduce noise from image data. US 8,712,184 B1 and U 9,436,985 B1 describe methods of reducing noise or improving signal-to-noise ratio in images obtained from scanning electron microscopes. In some cases, the rate of data generation can be too high to allow real time processing without a prohibitive amount of processing power and prior art methods are not easily optimized for high speed processing. Noise reduction techniques that are used with other types of images may not be suitable for use with images obtained by scanning electron microscopes or other types of charged particle assessment apparatus.

### SUMMARY

It is an object of the present disclosure to provide embodiments that reduce the computational cost of processing images generated by charged particle assessment apparatus to detect defects.

According to a first aspect of the invention, there is provided a data processing device for detecting defects in sample images generated by a charged particle assessment system, the device comprising:
an input module configured to receive a sample image from the charged particle assessment system;
a filter module configured to apply a filter to the sample image to generate a filtered sample image;
a reference image module configured to provide a reference image based on one or more source images; and
a comparator configured to compare the filtered sample image to the reference image so as to detect defects in the sample image.

According to a second aspect of the invention there is provided a charged particle assessment system comprising a charged particle beam system and a data processing device as described above.

According to a third aspect of the invention there is provided a charged particle assessment system comprising a charged particle beam system and a plurality of data processing devices for detecting defects in sample images generated by the charged particle beam system, wherein the charged particle beam system comprises multiple-columns and each data processing device is associated with a respective one of the columns of the multiple-columns so that each data processing device is configured to receive a sample image from the respective one of the columns and to receive source images from one or more other columns.

According to fourth aspect of the invention there is provided a method of detecting defects in sample images generated by a charged particle beam system, the method comprising:
receiving a sample image from the charged particle beam system;
applying a filter to the sample image to generate a filtered sample image;
providing a reference image based on at least one source image; and
comparing the filtered sample image to the reference image so as to detect defects in the sample image.

### BRIEF DESCRIPTION OF FIGURES

The above and other aspects of the present disclosure will become more apparent from the description of exemplary embodiments, taken in conjunction with the accompanying drawings.
**FIG. 1** is a schematic diagram illustrating an exemplary charged particle beam inspection system.
**FIG. 2** is a schematic diagram illustrating an exemplary multi-beam charged particle assessment apparatus that is part of the exemplary charged particle beam inspection system of **FIG. 1****.**
**FIG. 3** is a schematic diagram of an exemplary electron optical column comprising a condenser lens array.
**FIG. 4** is a schematic diagram of an exemplary electron optical column comprising a macro collimator and macro scan deflector.
**FIG. 5** is a schematic diagram of an exemplary electron optical column comprising a beam separator.
**FIG. 6** is a schematic cross-sectional view of an objective lens array of a charged particle assessment system according to an embodiment.
**FIG. 7** **is** a bottom view of a modification of the objective lens array of **FIG. 7****.**
**FIG. 8** **is** a schematic diagram of an exemplary single beam electron optical column.
**FIG. 9** **is** a schematic diagram of a data path according to an embodiment.
**FIG. 10** is a diagram of a uniform kernel an embodiment.
**FIG. 11** is an example of an SEM image on which the methods of the invention may be performed.
**FIG. 12** is a schematic diagram explaining a die-to-die mode according to an embodiment.
**FIG. 13** is a schematic diagram explaining an intra-die mode according to an embodiment.
**FIG. 14** is a schematic diagram of a system including a single-column SEM according to an embodiment.
**FIG. 15** is a schematic diagram of a system including a multi-column SEM according to an embodiment.
**FIG. 16** is a schematic diagram of another system including a multi-column SEM according to an embodiment.

The schematic diagrams and views show the components described below. However, the components depicted in the figures are not to scale.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

The enhanced computing power of electronic devices, which reduces the physical size of the devices, can be accomplished by significantly increasing the packing density of circuit components such as transistors, capacitors, diodes, etc. on an IC chip. This has been enabled by increased resolution enabling yet smaller structures to be made. For example, an IC chip of a smart phone, which is the size of a thumbnail and available in, or earlier than, 2019, may include over 2 billion transistors, the size of each transistor being less than 1/1000th of a human hair. Thus, it is not surprising that semiconductor IC manufacturing is a complex and time-consuming process, with hundreds of individual steps. Errors in even one step have the potential to dramatically affect the functioning of the final product. Just one "killer defect" can cause device failure. The goal of the manufacturing process is to improve the overall yield of the process. For example, to obtain a 75% yield for a 50-step process (where a step can indicate the number of layers formed on a wafer), each individual step must have a yield greater than 99.4%,. If each individual step had a yield of 95%, the overall process yield would be as low as 7%.

While high process yield is desirable in an IC chip manufacturing facility, maintaining a high substrate (i.e. wafer) throughput, defined as the number of substrates processed per hour, is also essential. High process yield and high substrate throughput can be impacted by the presence of a defect. This is especially true if operator intervention is required for reviewing the defects. Thus, high throughput detection and identification of micro and nano-scale defects by inspection devices (such as a Scanning Electron Microscope ('SEM')) is essential for maintaining high yield and low cost.

A SEM comprises a scanning device and a detector apparatus. The scanning device comprises an illumination apparatus that comprises an electron source, for generating primary electrons, and a projection apparatus for scanning a sample, such as a substrate, with one or more focused beams of primary electrons. Together at least the illumination apparatus, or illumination system, and the projection apparatus, or projection system, may be referred to together as the electron-optical system or apparatus. The primary electrons interact with the sample and generate secondary electrons. The detection apparatus captures the secondary electrons from the sample as the sample is scanned so that the SEM can create an image of the scanned area of the sample. For high throughput inspection, some of the inspection apparatuses use multiple focused beams, i.e. a multi-beam, of primary electrons. The component beams of the multi-beam may be referred to as sub-beams or beamlets. A multi-beam can scan different parts of a sample simultaneously. A multi-beam inspection apparatus can therefore inspect a sample at a much higher speed than a single-beam inspection apparatus.

An implementation of a known multi-beam inspection apparatus is described below.

While the description and drawings are directed to an electron-optical system, it is appreciated that the embodiments are not used to limit the present disclosure to specific charged particles. References to electrons throughout the present document may therefore be more generally be considered to be references to charged particles, with the charged particles not necessarily being electrons.

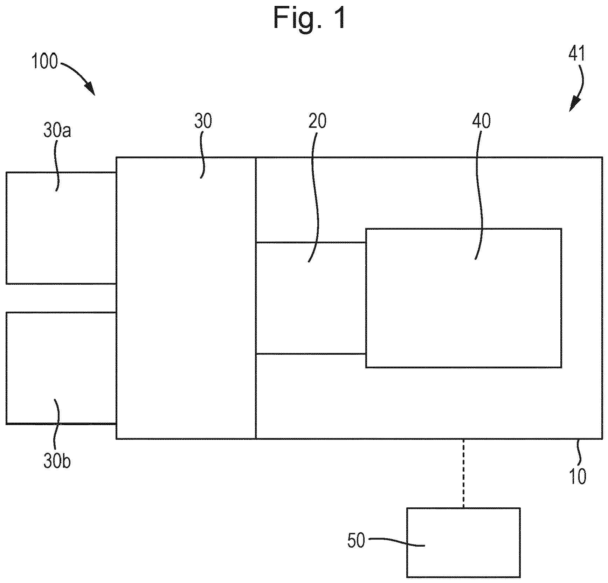

Reference is now made to **FIG. 1****,** which is a schematic diagram illustrating an exemplary charged particle beam inspection system 100, which may also be referred to as a charged particle beam assessment system or simply assessment system. The charged particle beam inspection system100 of **FIG. 1** includes a main chamber 10, a load lock chamber 20, an electron beam system 40, an equipment front end module (EFEM) 30 and a controller 50. The electron beam system 40 is located within the main chamber 10.

The EFEM 30 includes a first loading port 30a and a second loading port 30b. The EFEM 30 may include additional loading port(s). The first loading port 30a and the second loading port 30b may, for example, receive substrate front opening unified pods (FOUPs) that contain substrates (e.g., semiconductor substrates or substrates made of other material(s)) or samples to be inspected (substrates, wafers and samples are collectively referred to as "samples" hereafter). One or more robot arms (not shown) in the EFEM 30 transport the samples to the load lock chamber 20.

The load lock chamber 20 is used to remove the gas around a sample. This creates a vacuum that is a local gas pressure lower than the pressure in the surrounding environment. The load lock chamber 20 may be connected to a load lock vacuum pump system (not shown), which removes gas particles in the load lock chamber 20. The operation of the load lock vacuum pump system enables the load lock chamber to reach a first pressure below the atmospheric pressure. After reaching the first pressure, one or more robot arms (not shown) transport the sample from the load lock chamber 20 to the main chamber 10. The main chamber 10 is connected to a main chamber vacuum pump system (not shown). The main chamber vacuum pump system removes gas particles in the main chamber 10 so that the pressure in around the sample reaches a second pressure lower than the first pressure. After reaching the second pressure, the sample is transported to the electron beam system by which it may be inspected. An electron beam system 40 may comprise a multi-beam electron-optical apparatus.

The controller 50 is electronically connected to electron beam system 40. The controller 50 may be a processor (such as a computer) configured to control the charged particle beam inspection apparatus 100. The controller 50 may also include a processing circuitry configured to execute various signal and image processing functions. While the controller 50 is shown in **FIG. 1** as being outside of the structure that includes the main chamber 10, the load lock chamber 20, and the EFEM 30, it is appreciated that the controller 50 may be part of the structure. The controller 50 may be located in one of the component elements of the charged particle beam inspection apparatus or it can be distributed over at least two of the component elements. While the present disclosure provides examples of the main chamber 10 housing an electron beam system, it should be noted that aspects of the disclosure in their broadest sense are not limited to a chamber housing an electron beam system. Rather, it is appreciated that the foregoing principles may also be applied to other devices and other arrangements of apparatus, that operate under the second pressure.

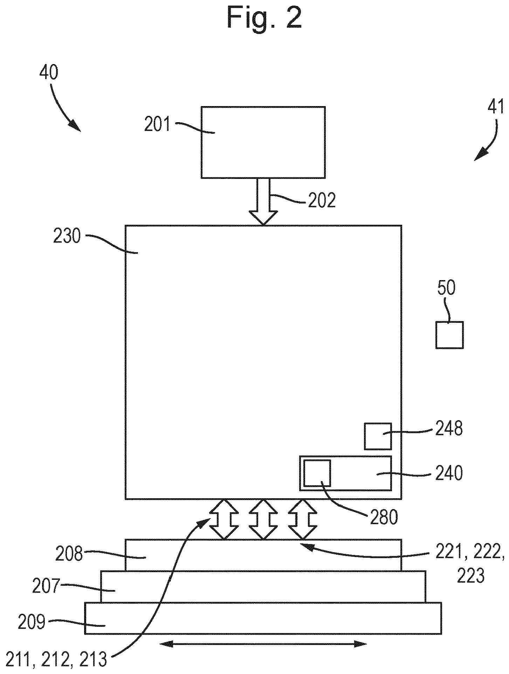

Reference is now made to **FIG. 2****,** which is a schematic diagram illustrating an exemplary electron beam system 40, including a multi-beam electron-optical system 41, that is part of the exemplary charged particle beam inspection system 100 of **FIG. 1****.** The electron beam system 40 comprises an electron source 201 and a projection apparatus 230. The electron beam system 40 further comprises a motorized stage 209 and a sample holder 207. The electron source 201 and projection apparatus 230 may together be referred to as the electron-optical system 41 or as an electron-optical column. The sample holder 207 is supported by motorized stage 209 so as to hold a sample 208 (e.g., a substrate or a mask) for inspection. The multi-beam electron-optical system 41 further comprises a detector 240 (e.g. an electron detection device).

The electron source 201 may comprise a cathode (not shown) and an extractor or anode (not shown). During operation, the electron source 201 is configured to emit electrons as primary electrons from the cathode. The primary electrons are extracted or accelerated by the extractor and/or the anode to form a primary electron beam 202.

The projection apparatus 230 is configured to convert the primary electron beam 202 into a plurality of sub-beams 211, 212, 213 and to direct each sub-beam onto the sample 208. Although three sub-beams are illustrated for simplicity, there may be many tens, many hundreds, many thousands, many tens of thousands or many hundreds of thousands of sub-beams. The sub-beams may be referred to as beamlets.

The controller 50 may be connected to various parts of the charged particle beam inspection apparatus 100 of **FIG. 1****,** such as the electron source 201, the detector 240, the projection apparatus 230, and the motorized stage 209. The controller 50 may perform various image and signal processing functions. The controller 50 may also generate various control signals to govern operations of the charged particle beam inspection apparatus, including the charged particle multi-beam apparatus.

The projection apparatus 230 may be configured to focus sub-beams 211, 212, and 213 onto a sample 208 for inspection and may form three probe spots 221, 222, and 223 on the surface of sample 208. The projection apparatus 230 may be configured to deflect the primary sub-beams 211, 212, and 213 to scan the probe spots 221, 222, and 223 across individual scanning areas in a section of the surface of the sample 208. In response to incidence of the primary sub-beams 211, 212, and 213 on the probe spots 221, 222, and 223 on the sample 208, electrons are generated from the sample 208 which include secondary electrons and backscattered electrons which may be referred to as signal particles. The secondary electrons typically have electron energy ≤ 50 eV. Actual secondary electrons can have an energy of less than 5 eV, but anything beneath 50 eV is generally treated at a secondary electron. Backscattered electrons typically have electron energy between 0 eV and the landing energy of the primary sub-beams 211, 212, and 213. As electrons detected with an energy of less than 50 eV is generally treated as a secondary electron, a proportion of the actual backscatter electrons will be counted as secondary electrons.

The detector 240 is configured to detect signal particles such as secondary electrons and/or backscattered electrons and to generate corresponding signals which are sent to a signal processing system 280, e.g. to construct images of the corresponding scanned areas of sample 208. The detector 240 may be incorporated into the projection apparatus 230.

The signal processing system 280 may comprise a circuit (not shown) configured to process signals from the detector 240 so as to form an image. The signal processing system 280 could otherwise be referred to as an image processing system. The signal processing system may be incorporated into a component of the electron beam system 40 such as the detector 240 (as shown in **FIG. 2**). However, the signal processing system 280 may be incorporated into any components of the inspection apparatus 100 or electron beam system 40, such as, as part of the projection apparatus 230 or the controller 50. The signal processing system 280 may include an image acquirer (not shown) and a storage device (not shown). For example, the signal processing system may comprise a processor, computer, server, mainframe host, terminals, personal computer, any kind of mobile computing devices, and the like, or a combination thereof. The image acquirer may comprise at least part of the processing function of the controller. Thus the image acquirer may comprise at least one or more processors. The image acquirer may be communicatively coupled to the detector 240 permitting signal communication, such as an electrical conductor, optical fiber cable, portable storage media, IR, Bluetooth, internet, wireless network, wireless radio, among others, or a combination thereof. The image acquirer may receive a signal from the detector 240, may process the data comprised in the signal and may construct an image therefrom. The image acquirer may thus acquire images of the sample 208. The image acquirer may also perform various post-processing functions, such as generating contours, superimposing indicators on an acquired image, and the like. The image acquirer may be configured to perform adjustments of brightness and contrast, etc. of acquired images. The storage may be a storage medium such as a hard disk, flash drive, cloud storage, random access memory (RAM), other types of computer readable memory, and the like. The storage may be coupled with the image acquirer and may be used for saving scanned raw image data as original images, and post-processed images.

The signal processing system 280 may include measurement circuitry (e.g., analog-to-digital converters) to obtain a distribution of the detected secondary electrons. The electron distribution data, collected during a detection time window, can be used in combination with corresponding scan path data of each of primary sub-beams 211, 212, and 213 incident on the sample surface, to reconstruct images of the sample structures under inspection. The reconstructed images can be used to reveal various features of the internal or external structures of the sample 208. The reconstructed images can thereby be used to reveal any defects that may exist in the sample. The above functions of the signal processing system 280 may be carried out in the controller 50 or shared between the signal processing systems 280 and controller 50 as convenient.

The controller 50 may control the motorized stage 209 to move sample 208 during inspection of the sample 208. The controller 50 may enable the motorized stage 209 to move the sample 208 in a direction, preferably continuously, for example at a constant speed, at least during sample inspection. The controller 50 may control movement of the motorized stage 209 so that it changes the speed of the movement of the sample 208 dependent on various parameters. For example, the controller 50 may control the stage speed (including its direction) depending on the characteristics of the inspection steps of scanning process and/or scans of the scanning process for example as disclosed in EPA 21171877.0 filed 3 May 2021 which is hereby incorporated in so far as the combined stepping and scanning strategy at least of the stage.

Known multi-beam systems, such as the electron beam system 40 and charged particle beam inspection apparatus 100 described above, are disclosed in US2020118784, US20200203116, US 2019/0259570 and US2019/0259564 which are hereby incorporated by reference.

The electron beam system 40 may comprise a projection assembly to regulate accumulated charges on the sample by illuminating the sample 208.

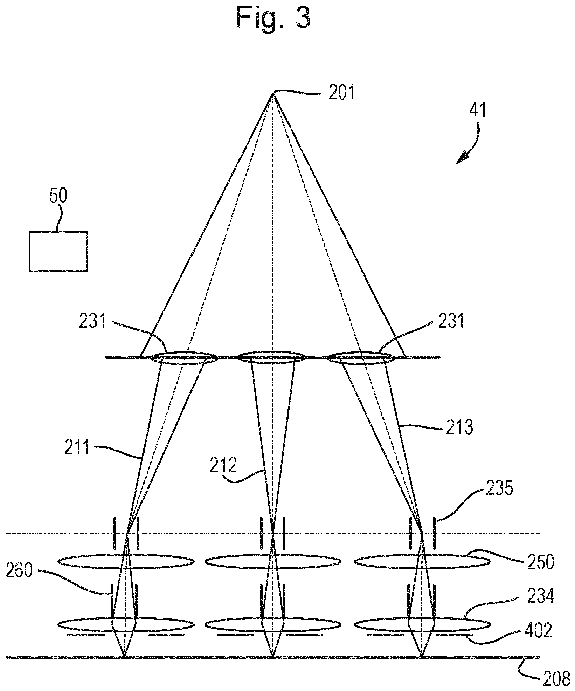

**FIG. 3** is a schematic diagram of an exemplary electron-optical column 41 for use in an assessment system. For ease of illustration, lens arrays are depicted schematically herein by arrays of oval shapes. Each oval shape represents one of the lenses in the lens array. The oval shape is used by convention to represent a lens, by analogy to the biconvex form often adopted in optical lenses. In the context of charged particle arrangements such as those discussed herein, it will be understood however that lens arrays will typically operate electrostatically and so may not require any physical elements adopting a biconvex shape. As described below, lens arrays may instead comprise multiple plates with apertures. Each plate with apertures may be referred to as an electrode. The electrodes may be provided in series along sub-beam paths of sub-beams of a multi-beam.

The electron source 201 directs electrons toward an array of condenser lenses 231 (otherwise referred to as a condenser lens array). The electron source 201 is desirably a high brightness thermal field emitter with a good compromise between brightness and total emission current. There may be many tens, many hundreds or many thousands of condenser lenses 231. The condenser lenses 231 may comprise multi-electrode lenses and have a construction based on EP1602121A1, which document is hereby incorporated by reference in particular to the disclosure of a lens array to split an e-beam into a plurality of sub-beams, with the array providing a lens for each sub-beam. The array of condenser lenses 231 may take the form of at least two plates, preferably three, acting as electrodes, with an aperture in each plate aligned with each other and corresponding to the location of a sub-beam. At least two of the plates are maintained during operation at different potentials to achieve the desired lensing effect. Between the plates of the condenser lens array are electrically insulating plates for example made of an insulating material such as ceramic or glass, with one or more apertures for the sub-beams. An alternative arrangement one more of the plates may feature apertures each with their own electrode, each with an array of electrodes around their perimeter or arranged in groups of apertures having a common electrode.

In an arrangement the array of condenser lenses 231 is formed of three plate arrays in which charged particles have the same energy as they enter and leave each lens, which arrangement may be referred to as an Einzel lens. Thus, dispersion only occurs within the Einzel lens itself (between entry and exit electrodes of the lens), thereby limiting off-axis chromatic aberrations. When the thickness of the condenser lenses is low, e.g. a few mm, such aberrations have a small or negligible effect.

Each condenser lens in the array directs electrons into a respective sub-beam 211, 212, 213 which is focused at a respective intermediate focus 233. A collimator or an array of collimators may be positioned to operate on the respective intermediate focus 233. The collimators may take the form of deflectors 235 provided at the intermediate focuses 233. Deflectors 235 are configured to bend a respective beamlet 211, 212, 213 by an amount effective to ensure that the principal ray (which may also be referred to as the beam axis) is incident on the sample 208 substantially normally (i.e. at substantially 90° to the nominal surface of the sample).

Below (i.e. downbeam of or further from source 201) deflectors 235 there is a control lens array 250 comprising a control lens 251 for each sub-beam 211, 212, 213. Control lens array 250 may comprise two or more, preferably at least three, plate electrode arrays connected to respective potential sources, preferably with insulating plates in contact with the electrodes for example between the electrodes. Each of the plate electrode arrays may be referred to as a control electrode. A function of control lens array 250 is to optimize the beam opening angle with respect to the demagnification of the beam and/or to control the beam energy delivered to the objective lenses 234, each of which directs a respective sub-beam 211, 212, 213 onto the sample 208.

Optionally an array of scan deflectors 260 is provided between the control lens array 250 and the array of objective lenses 234 (objective lens array). The array of scan deflectors 260 comprises a scan deflector 261 for each sub-beam 211, 212, 213. Each scan deflector is configured to deflect a respective sub-beam 211, 212, 213 in one or two directions so as to scan the sub beam across the sample 208 in one or two directions.

A detector module 240 of a detector is provided within or between the objective lenses 234 and the sample 208 to detect signal electrons/ particles emitted from the sample 208. An exemplary construction of such a detector module 240 is described below. Note that the detector additionally or alternative may have detector elements up-beam along the primary beam path of the objective lens array or even the control lens array.

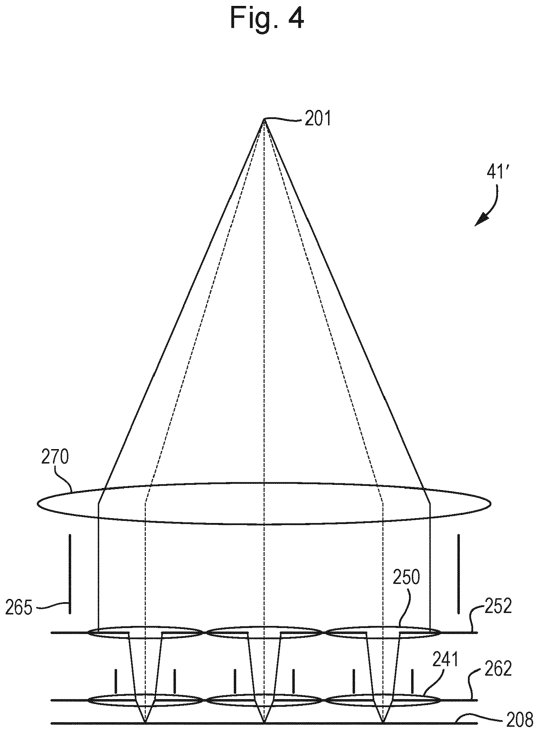

**FIG. 4** is a schematic diagram of an exemplary electron beam system having an alternative electron-optical column 41'. The electron-optical column 41' comprises an objective lens array 241. The objective lens array 241 comprises a plurality of objective lenses. The objective lens array 241 may be an exchangeable module. For conciseness, features of the electron beam system that have already been described above may not be repeated here.

As shown in **FIG. 4****,** the electron-optical column 41' comprises a source 201. The source 201 provides a beam of charged particles (e.g. electrons). The multi-beam focused on the sample 208 is derived from the beam provided by the source 201. Sub-beams may be derived from the beam, for example, using a beam limiter defining an array of beam-limiting apertures. The beam may separate into the sub-beams on meeting the control lens array 250. The sub-beams are substantially parallel on entry to the control lens array 250. In the example shown, a collimator is provided up-beam of the objective lens array assembly.

The collimator may comprise a macro collimator 270. The macro collimator 270 acts on the beam from the source 201 before the beam has been split into a multi-beam. The macro collimator 270 bends respective portions of the beam by an amount effective to ensure that a beam axis of each of the sub-beams derived from the beam is incident on the sample 208 substantially normally (i.e. at substantially 90° to the nominal surface of the sample 208). The macro collimator 270 comprise a magnetic lens and/or an electrostatic lens. In another arrangement (not shown), the macro-collimator may be partially or wholly replaced by a collimator element array provided down-beam of the upper beam limiter.

In the electron-optical column 41' of **FIG. 4** a macro scan deflector 265 is provided to cause sub-beams to be scanned over the sample 208. The macro scan deflector 265 deflects respective portions of the beam to cause the sub-beams to be scanned over the sample 208. In an embodiment, the macro scan deflector 265 comprises a macroscopic multi-pole deflector, for example with eight poles or more. The deflection is such as to cause sub-beams derived from the beam to be scanned across the sample 208 in one direction (e.g. parallel to a single axis, such as an X axis) or in two directions (e.g. relative to two non-parallel axes, such as X and Y axes). The macro scan deflector 265 acts macroscopically on all of the beam rather than comprising an array of deflector elements that are each configured to act on a different individual portion of the beam. In the embodiment shown, the macro scan deflector 265 is provided between the macro collimator 270 and the control lens array 250. In another arrangement (not shown), the macro scan deflector 265 may be partially or wholly replaced by a scan deflector array, for example as a scan deflector for each sub-beam. In other embodiments both a macro scan deflector 265 and the scan-deflector array are provided, and they may operate in synchronization.

In some embodiments, the electron-optical system 41 further comprises an upper beam limiter 252. The upper beam limiter 252 defines an array of beam-limiting apertures. The upper beam limiter 252 may be referred to as an upper beam-limiting aperture array or up-beam beam-limiting aperture array. The upper beam limiter 252 may comprise a plate (which may be a plate-like body) having a plurality of apertures. The upper beam limiter 252 forms sub-beams from a beam of charged particles emitted by the source 201. Portions of the beam other than those contributing to forming the sub-beams may be blocked (e.g. absorbed) by the upper beam limiter 252 so as not to interfere with the sub-beams down-beam. The upper beam limiter 252 may be referred to as a sub-beam defining aperture array.

In some embodiments, as exemplified in **FIG. 4****,** the objective lens array assembly (which is a unit that comprises the objective lens array 241) further comprises a beam shaping limiter 262. The beam shaping limiter 262 defines an array of beam-limiting apertures. The beam shaping limiter 262 may be referred to as a lower beam limiter, lower beam-limiting aperture array or final beam-limiting aperture array. The beam shaping limiter 262 may comprise a plate (which may be a plate-like body) having a plurality of apertures. The beam shaping limiter 262 may be down-beam from at least one electrode (optionally from all electrodes) of the control lens array 250. In some embodiments, the beam shaping limiter 262 is down-beam from at least one electrode (optionally from all electrodes) of the objective lens array 241. In an arrangement, the beam shaping limiter 262 is structurally integrated with an electrode of the objective lens array 241. Desirably, the beam shaping limiter 262 is positioned in a region of low electrostatic field strength. The alignment of the beam liming apertures with the objective lens array is such that a portion of a sub-beam from the corresponding objective lens can pass through the beam-limiting aperture and impinge onto the sample 208, so that only a selected portion of the sub-beam incident onto the beam shaping limiter 262 to pass through the beam-limiting aperture.

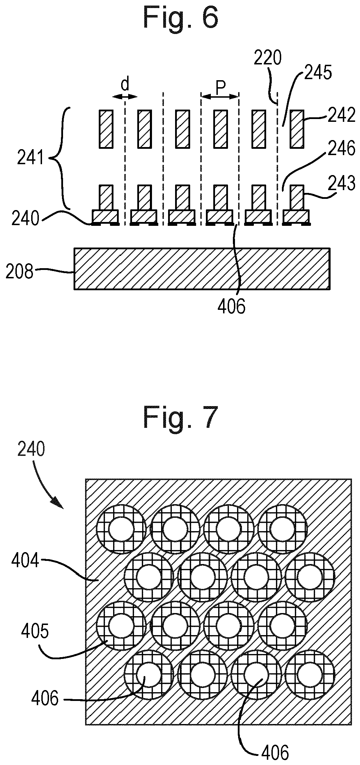

Any of the objective lens array assemblies described herein may further comprise a detector 240. The detector detects electrons emitted from the sample 208. The detected electrons may include any of the electrons detected by an SEM, including secondary and/or backscattered electrons emitted from the sample 208. An exemplary construction of a detector 240 is described in more detail below with reference to **FIGs. 6** and **7****.**

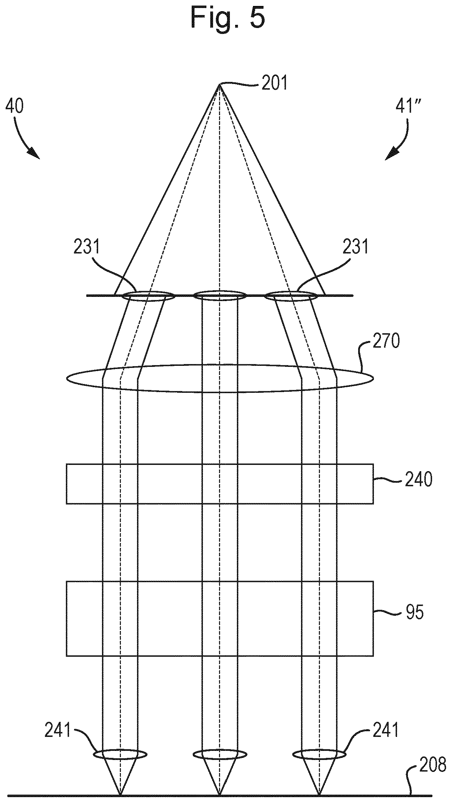

**FIG. 5** schematically depicts an electron beam system 40 including an electron-optical column 41" according to an embodiment. Features that are the same as those described above are given the same reference numerals. For conciseness, such features are not described in detail with reference to **FIG. 5****.** For example, the source 201, the condenser lenses 231, the macro collimator 270, the objective lens array 241 and the sample 208 may be as described above.

As described above, in an embodiment the detector 240 is between the objective lens array 241 and the sample 208. The detector 240 may face the sample 208. Alternatively, as shown in **FIG. 5****,** in an embodiment the objective lens array 241, which comprises the plurality of objective lenses, is between the detector 240 and the sample 208.

In an embodiment a deflector array 95 is between the detector 240 and the objective lens array 241. In an embodiment the deflector array 95 comprises a Wien filter array so that deflector array may be referred to as a beam separator. The deflector array 95 is configured to provide a magnetic field to disentangle the charged particles projected to the sample 208 apart from the secondary electrons from the sample 208 towards the detector 240.

In an embodiment the detector 240 is configured to detect signal particles by reference to the energy of the charged particle, i.e. dependent on a band gap. Such a detector 240 may be called an indirect current detector. The secondary electrons emitted from the sample 208 gain energy from the fields between the electrodes. The secondary electrodes have sufficient energy once they reach the detector 240. In a different arrangement the detector 240 may be a scintillator array of for example of fluorescing strip between the beams and that are positioned up beam along the primary beam path with respect to the Wien filter. Primary beams passing through the Wien filter array (of magnetic and electrostatic strips orthogonal to the primary beam path) have paths up beam and down beam of the Wien filter array that substantially parallel; whereas signal electrons from the sample are directed to the Wien filter array towards the scintillator array. The generated photons are directed via a photon transport unit (e.g. an array of optical fibers) to a remote optical detector which generates a detection signal on detection of a photon

The objective lens array 241 of any embodiment may comprise at least two electrodes in which are defined aperture arrays. In other words, the objective lens array comprises at least two electrodes with a plurality of holes or apertures. **FIG. 6** shows electrodes 242, 243 which are part of an exemplary objective lens array 241 having respective aperture arrays 245, 246. The position of each aperture in an electrode corresponds to the position of a corresponding aperture in another electrode. The corresponding apertures operate in use on the same beam, sub-beam or group of beams in the multi-beam. In other words, corresponding apertures in the at least two electrodes are aligned with and arranged along a sub-beam path, i.e. one of the sub-beam paths 220. Thus, the electrodes are each provided with apertures through which the respective sub-beam 211, 212, 213 propagates.

The objective lens array 241 may comprise two electrodes, as shown in **FIG. 6****,** or three electrodes, or may have more electrodes (not shown). An objective lens array 241 having only two electrodes can have lower aberration than an objective lens array 241 having more electrodes. A three-electrode objective lens can have greater potential differences between the electrodes and so enable a stronger lens. Additional electrodes (i.e. more than two electrodes) provide additional degrees of freedom for controlling the electron trajectories, e.g. to focus secondary electrons as well as the incident beam. A benefit of two electrode lens over an Einzel lens is that the energy of an incoming beam is not necessarily the same as an out-going beam. Beneficially the potential differences on such a two electrode lens array enables it to function as either an accelerating or a decelerating lens array.

Adjacent electrodes of the objective lens array 241 are spaced apart from each other along the sub-beam paths. The distance between adjacent electrodes, in which an insulating structure might be positioned as described below, is larger than the objective lens.

Preferably, each of the electrodes provided in the objective lens array 241 is a plate. The electrode may otherwise be described as a flat sheet. Preferably, each of the electrodes is planar. In other words, each of the electrodes will preferably be provided as a thin, flat plate, in the form of a plane. Of course, the electrodes are not required to be planar. For example, the electrode may bow due to the force due to the high electrostatic field. It is preferable to provide a planar electrode because this makes manufacturing of the electrodes easier as known fabrication methods can be used. Planar electrodes may also be preferable as they may provide more accurate alignment of apertures between different electrodes.

The objective lens array 241 can be configured to demagnify the charged particle beam by a factor greater than 10, desirably in the range of 50 to 100 or more.

A detector 240 is provided to detect signal particles, i.e. secondary and/or backscattered charged particles, emitted from the sample 208. The detector 240 is positioned between the objective lenses 234 and the sample 208. On direction of a signal particle the detector generates a detection signal. The detector 240 may otherwise be referred to as a detector array or a sensor array, and the terms "detector" and "sensor" are used interchangeably throughout the application.

An electron-optical device for the electron-optical system 41 may be provided. The electron-optical device is configured to project a beam of electrons towards the sample 208. The electron-optical device may comprise the objective lens array 241. The electron-optical device may comprise the detector 240. The array of objective lenses (i.e. the objective lens array 241) may correspond with the array of detectors (i.e. the detector 240) and/or any of the beams (i.e. the sub-beams).

An exemplary detector 240 is described below. However, any reference to the detector 240 could be a single detector (i.e. at least one detector) or multiple detectors as appropriate. The detector 240 may comprise detector elements 405 (e.g. sensor elements such as capture electrodes). The detector 240 may comprise any appropriate type of detector. For example, capture electrodes for example to detect directly electron charge, scintillators or PIN elements can be used. The detector 240 may be a direct current detector or an indirect current detector. The detector 240 may be a detector as described below in relation to **FIG. 7****.**

The detector 240 may be positioned between the objective lens array 241 and the sample 208. The detector 240 is configured to be proximate the sample 208. The detector 240 may be very close to the sample 208. Alternatively, there may be a larger gap from the detector 240 to the sample 208. The detector 240 may be positioned in the device so as to face the sample 208. Alternatively, the detector 240 may be positioned elsewhere in the electron-optical system 41 such that part of the electron-optical device that is not a detector faces the sample 208.

**FIG. 7** is a bottom view of the detector 240 which comprises a substrate 404 on which are provided a plurality of detector elements 405 each surrounding a beam aperture 406. The beam apertures 406 may be formed by etching through the substrate 404. In the arrangement shown in **FIG. 7****,** the beam apertures 406 are in a hexagonal close packed array. The beam apertures 406 can also be differently arranged, e.g. in a rectangular, or a rhombic, array. The beam arrangement of the hexagonal arrangement in **FIG. 7** may be more densely packed than a square beam arrangement. The detector elements 405 may be arranged in a rectangular array or a hexagonal array.

Capture electrodes 405 form the bottommost, i.e. most close to the sample, surface of the detector module 240. Between the capture electrodes 405 and the main body of the silicon substrate 404 a logic layer is provided. Logic layer may include amplifiers, e.g. Trans Impedance Amplifiers, analogue to digital converters, and readout logic. In an embodiment, there is one amplifier and one analogue to digital converter per capture electrode 405. A circuit featuring these elements may be comprised in a unit area referred to as a cell that is associated with an aperture. The detector model 240 may have several cells each associated with an aperture. Within or on the substrate is a wiring layer connected to the logic layer and externally connecting the logic layer of each cell for example via power, control and data lines. The integrated detector module 240 described above is particularly advantageous when used with a system having tunable landing energy as secondary electron capture can be optimized for a range of landing energies. A detector module in the form of an array can also be integrated into other electrode arrays, not only the lowest electrode array. Such a detector module may feature detectors that are scintillators or PIN detectors, for example above the down-beam most surface of the objective lens. Such detector modules may feature a similar circuit architecture as a detector module comprising a current detector. Further details and alternative arrangements of a detector module integrated into an objective lens can be found in EP Application Numbers 20184160.8 and 20217152.6, which document is hereby incorporated by reference at least so far as details of the detector module.

The detector may be provided with multiple portions and more specifically, multiple detecting portions. The detector comprising multiple portions may be associated with one of the sub-beams 211, 212, 213. Thus, the multiple portions of one detector 240 may be configured to detect signal particles emitted from the sample 208 in relation to one of the primary beams (which may otherwise be referred to as sub-beams 211, 212, 213). In other words, the detector comprising multiple portions may be associated with one of the apertures in at least one of the electrodes of the objective lens assembly. More specifically, the detector 405 comprising multiple portions may be arranged around a single aperture 406, which provides an examples of such a detector. As mentioned the detection signal from the detector module is used to generate an image. With multiple detecting portions, the detection signal comprises components from the different detecting signals that may be processed as data sets or in a detection image.

In an embodiment, the objective lens array 241 is an exchangeable module, either on its own or in combination with other elements such as the control lens array and/or detector array. The exchangeable module may be field replaceable, i.e. the module can be swapped for a new module by a field engineer. In an embodiment, multiple exchangeable modules are contained within the system and can be swapped between operable and non-operable positions without opening the electron beam system.

In some embodiments, one or more aberration correctors are provided that reduce one or more aberrations in the sub-beams. Aberration correctors positioned in, or directly adjacent to, the intermediate foci (or intermediate image plane) may comprise deflectors to correct for the source 201 appearing to be at different positions for different beams. Correctors can be used to correct macroscopic aberrations resulting from the source that prevent a good alignment between each sub-beam and a corresponding objective lens. Aberration correctors may correct aberrations that prevent a proper column alignment. Aberration correctors may be CMOS based individual programmable deflectors as disclosed in EP2702595A1 or an array of multipole deflectors as disclosed EP2715768A2, of which the descriptions of the beamlet manipulators in both documents are hereby incorporated by reference. Aberration correctors may reduce one or more of the following: field curvature; focus error; and astigmatism.

The invention can be applied to various different system architectures. For example, the electron beam system may be a single beam system, or may comprise a plurality of single beam columns or may comprise a plurality of columns of multi-beams. The columns may comprise the electron-optical system 41 described in any of the above embodiments or aspects. As a plurality of columns (or a multi-column system), the devices may be arranged in an array which may number two to one hundred columns or more. The electron beam system may take the form of an embodiment as described with respect to and depicted in **FIG. 3** or as described with respect to and depicted in **FIG. 4****,** although preferably having an electrostatic scan deflector array and an electrostatic collimator array.

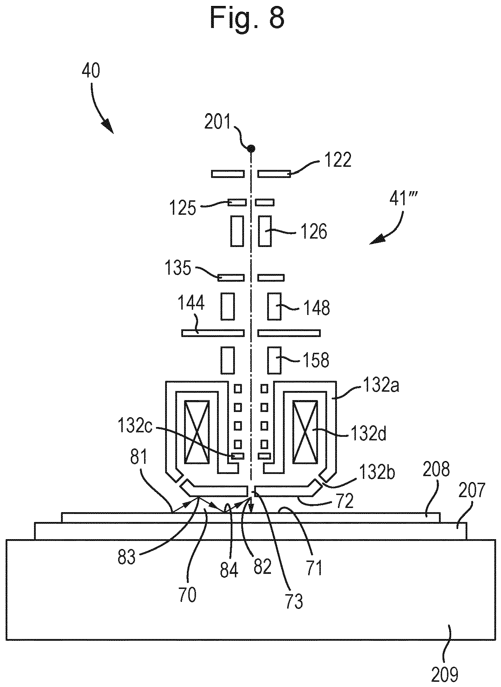

**FIG. 8** is a schematic diagram of an exemplary single beam electron beam system 41'" according to an embodiment. As shown in **FIG. 8****,** in an embodiment the electron beam system comprises a sample holder 207 supported by a motorized stage 209 to hold a sample 208 to be inspected. The electron beam system comprises an electron source 201. The electron beam system further comprises a gun aperture 122, a beam limit aperture 125, a condenser lens 126, a column aperture 135, an objective lens assembly 132, and an electron detector 144. The objective lens assembly 132, in some embodiments, may be a modified swing objective retarding immersion lens (SORIL), which includes a pole piece 132a, a control electrode 132b, a deflector 132c, and an exciting coil 132d. The control electrode 132b has an aperture formed in it for the passage of the electron beam. The control electrode 132b forms the facing surface 72, described in more detail below.

In an imaging process, an electron beam emanating from the source 201 may pass through the gun aperture 122, the beam limit aperture 125, the condenser lens 126, and be focused into a probe spot by the modified SORIL lens and then impinge onto the surface of sample 208. The probe spot may be scanned across the surface of the sample 208 by the deflector 132c or other deflectors in the SORIL lens. Secondary electrons emanated from the sample surface may be collected by the electron detector 144 to form an image of an area of interest on the sample 208.

The condenser and illumination optics of the electron-optical system 41 may comprise or be supplemented by electromagnetic quadrupole electron lenses. For example, as shown in **FIG. 8** the electron-optical system 41 may comprise a first quadrupole lens 148 and a second quadrupole lens 158. In an embodiment, the quadrupole lenses are used for controlling the electron beam. For example, first quadrupole lens 148 can be controlled to adjust the beam current and second quadrupole lens 158 can be controlled to adjust the beam spot size and beam shape.

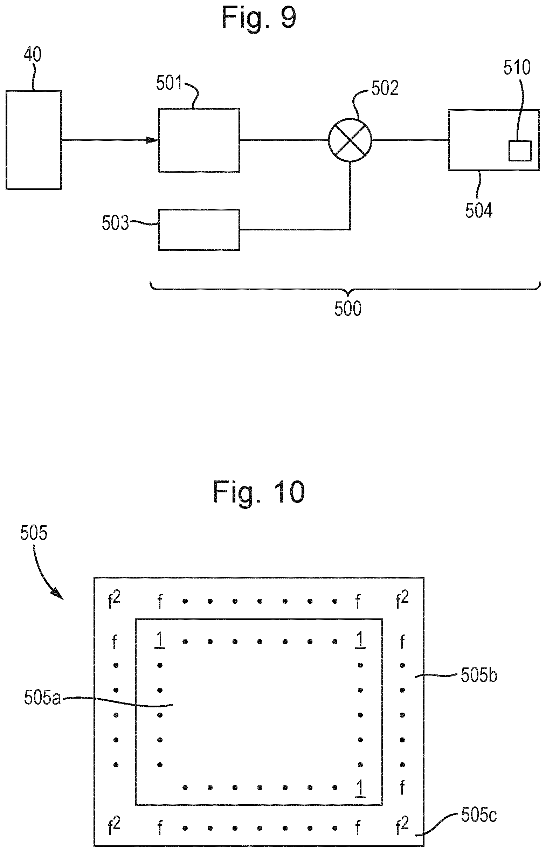

Images output from a charged particle assessment device, e.g. electron beam system 40 need to be processed automatically to detect defects in samples being assessed. A data processing device 500 for detecting defects in images generated by a charged particle assessment device is depicted in **Fig. 9****.** Data processing device 500 may be part of controller 50, part of another computer in the fab or integrated elsewhere in the charged particle assessment device . It should be noted that the arrangement of components of the data processing device 500 as shown and described with reference to **Fig. 9** is exemplary and is provided to aid explanation of the functions of data processors that operate on the images generated by the charged particle assessment device. Any feasible arrangement conceivable by a person skilled in the art of data processors that is able to achieve the functions of the data processing device 500 as described herein may be used.

The charged particle assessment device may have a high throughput, a large field of view and a high resolution, meaning that large images may be output at a high rate. For example an image may have data from thousands, even tens of thousands, of detector portions. It is desirable that output images are processed at a rate equal to or at least similar to the rate of output from the charged particle assessment system 40. The rate of processing images can be slightly slower than the rate of image generation provided it is possible to catch up during the time taken to unload a completed sample and load a new sample but in the long run it is undesirable for image processing to be slower than image generation. Known image processing approaches for detecting defects when applied to multi-beam or multi-column charged particle assessment devices require a prohibitive amount of processing power to keep up with the rate of image generation.

Detection of defects may be done by comparing an image of a part of the sample, referred to herein as a sample image, to a reference image. Any pixel that differs from the corresponding pixel of the reference image may be considered a defect, with adjacent pixels that differ from the reference image being considered a single defect. However, an overly-strict approach to labeling pixels as defective may result in false positives, i.e. samples being labelled as having defects when in fact no significant defect is present. False positives are likely in the case where either or both the sample image or the reference image has noise. Therefore, it is desirable to apply noise reduction to either or both the reference image and the sample image. Noise reduction increases the amount of processing required to detect defects.

Having tested various alternatives, the present inventors have determined that an efficient and effective approach to detection of defects is to reduce noise in the sample image by applying a uniform filter (convolution with a uniform kernel). To reduce noise in the reference image multiple source images are averaged. In some cases, e.g. where the reference image is obtained by simulation from design data (often in GDSII format), noise reduction on the reference image may be omitted.

The efficiency and effectiveness of noise reduction in the sample image may be optimized by suitable selection of the size of the uniform filter. The optimum size of the filter may depend on factors such as the resolution of the sample images and the size of features on the sample being inspected. The size of the uniform kernel used to implement to uniform filter may be equal to a non-integer number of pixels. The uniform kernel is square, so its size is its width. The inventors have determined that a width in the range of 1.1 to 5 pixels, desirably in the range of 1.4 to 3.8 pixels, for the uniform kernel is suitable in a variety of use cases. The form of the uniform kernel is discussed further below. Noise reduction by use of a uniform filter lends itself well to implementation on dedicated hardware, such as FPGAs or ASICs, enabling highly efficient and fast processing.

The averaging performed on source images to obtain a reference image may vary depending on the nature of the source images. Where the source images derive from a library of past scans, a large number of (e.g. more than 20, more than 30 or about 35) images may be averaged to obtain the reference image since the averaging can be performed off-line. The source images may be aligned before averaging.

Alternatively, the sample image may be compared to a reference image derived from "live" source images obtained from different parts of the same sample. In this case fewer, e.g. two, source images may be averaged to obtain the reference image. The two source images may be obtained from corresponding regions of different dies of the sample. Alternatively, if the pattern being inspected has a repeating element, the source images may be obtained from the same die. In some cases the source images may be shifted portions of the sample images. In cases where the sample image is compared to a reference image derived from live source images, the roles of the different images may rotate. For example if three images A B and C are output by a charged particle assessment device: A and B may be averaged to provide a reference image to compare to C; A and C may be averaged to provide a reference image to compare to B; while B and C are averaged to provide a reference image to compare to A.

The result of the comparison of a sample image to a reference image may be a simple binary value representing a difference or a correspondence (i.e. matching) between the sample and references images. More desirably, the result of the comparison is a difference value representing the magnitude of the difference between the sample image and the reference image. Desirably, the result of the comparison is a difference value for each pixel (or each group of adjacent pixels which may be referred to a 'region of pixels') so that locations of defects within a source image can be determined greater precision.

To determine if a difference of a pixel or a region of pixels between source image and reference image represents a defect in the pattern being inspected, a threshold may be applied to the difference value corresponding to the pixel or region of pixels. Alternatively, a predetermined number of locations having the highest difference values may be selected as candidate defects for further inspection. Adjacent pixels having difference values higher than a threshold may be considered a single defect or candidate defect. All pixels of a single defect may be ascribed the same difference value. Such adjacent pixels and all pixels of a single defect may be referred to as a region of pixels.

An efficient approach to identifying a predetermined number of locations having the highest difference values is to process pixels in sequence and write pixel information and difference values to a buffer. Pixel information may include a region of pixel data surrounding a pixel or group of pixels identified as a potential defect. Such a region of pixel data may be referred to as a clip. If the buffer is full and a newly processed pixel has a higher difference value than the pixel in the buffer with the lowest difference value, the pixel information relating to the pixel with the lowest difference value is overwritten. In one possible implementation, until the buffer is full, the threshold for selection of pixels is set at a predetermined level. When the buffer is full the threshold is updated to the lowest difference value of the pixels stored in the buffer and updated each time a pixel in the buffer is overwritten. In this way only one comparison need be performed. Alternatively, the threshold can be maintained constant and initially selected pixels can be separately tested to see if they have a higher difference than a pixel in the buffer already. Since the number of selected pixels is much lower than the total number of pixels, further processing of the selected pixels can be performed asynchronously (e.g. by a different processor) from initial processing without reducing throughput.

When selecting pixels for further processing as candidate or actual defects, it is desirable to select a region around the pixel, or a region of pixels, that has been identified as differing from the reference image. The region may be referred to as a clip and is desirably of sufficient size to allow further automated or manual inspection to determine whether or not a significant defect is present.

The above-described data processing method may be used with either single-column or multi-column assessment systems. Particular advantages can be achieved when using a multi-column system if the column spacing is equal to the size of dies on the sample being inspected. In this case, two or more columns can provide live source images to generate a reference image to which a sample image generated by a further column is compared. The outputs of the columns can be used directly, without need for (or with reduced need for) buffering and alignment processing.

With a multi-column system it is desirable to provide multiple data processing devices, for example one per column, to process the output sample images of respective columns in parallel. In such an arrangement, a data processing device may receive images to be used as source images to generate a reference image from other columns that the one it receives a sample image. If the data processing devices are sufficiently fast, there may be fewer data processing devices than columns, with buffering and/or multi-threaded processing.

In more detail, the data processing apparatus 500 depicted in **Fig. 9** comprises a filter module 501 which receives and filters a sample image from a charged particle assessment system 40, a reference image generator 503 which generates a reference image based on source images, a comparator 502 which compares the filtered sample image to the reference image and an output module 504 which processes and outputs the result of the comparison.

Filter module 501 applies a filter, e.g. a uniform filter, of predetermined size to the sample image. Applying a uniform filter comprises convoluting the sample image with a uniform kernel. The size of the uniform kernel is determined, e.g. by the user, for inspection of a given sample based on, for example, the size of features on the sample, the size of defect to be detected, the resolution of the charged particle assessment device, the amount of noise in the images and the desired compromise between sensitivity and selectivity. The size of the uniform kernel does not have to be an integer number of pixels. For example, for pixel sizes in the range of from 5 to 14 nm and defects of order of 20 nm, a uniform kernel with a width in the range of 1.1 to 5 pixels, desirably in the range of 1.4 to 3.8 pixels, is advantageous by providing a high selectivity and high sensitivity.

A square uniform kernel 505 with a non-integer size (width) is depicted in **Fig. 10****.** Such a uniform kernel comprises a central region 505a of n x n values, all of which are 1, and a peripheral region 505b made up of a top row, a bottom row, a left column and a right column. All of the values of the peripheral region are f, where f < 1, except the corner values which are f². The effective size of the uniform kernel is equal to n + 2f pixels. Optionally, the uniform kernel may be normalized (i.e. all values divided by a constant so that the sum of all values is 1). Alternatively or in addition, the filtered sample image may be normalized or rescaled.

The kernel need not be square and may, for example, be rectangular or any other convenient shape. The filter function implemented by the kernel need not be the same shape and size as the kernel; a kernel that is larger than the filter function will include zero values. Desirably the filter is symmetrical but that is not essential. Simulations performed by the inventors suggest that a kernel implementing a uniform provides good results but some deviation from a mathematically uniform filter is permissible. For example corner filters could have values f, which would slightly overweight those pixels but not significantly. Non-uniform filters, e.g. a Gaussian filter, may be conveniently implemented by convolution with a suitable kernel.

Filter module 501, especially when configured to apply a uniform filter of predetermined size, is conveniently implemented by dedicated hardware, e.g. an FPGA or an ASIC. Such dedicated hardware can be more efficient and economic than programmed general purpose computing devices such as a standard or common type of CPU architecture. The processor may be less powerful than a CPU, but may have architecture suited to processing software for processing the detection signal data, i.e. the images and so be capable of processing the images in the same or less time than the CPU. Such detected processing architecture, despite having a processing capability lower than most contemporaneous CPUs may be as fast at processing the data because the more efficient data architecture of the dedicated processing architecture.

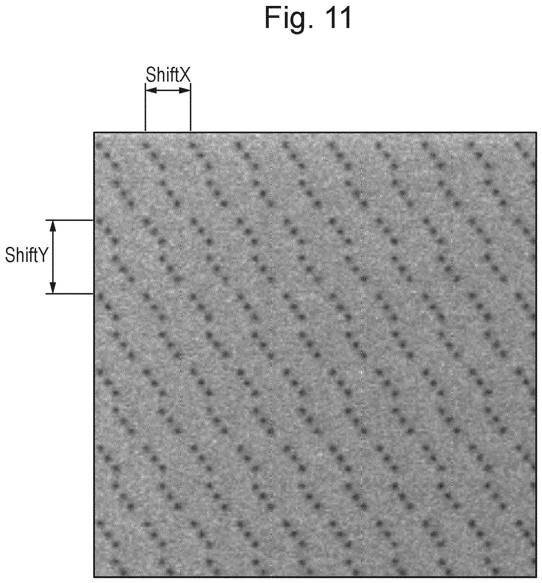

**Fig. 11** is, by way of an example, an image, or even part of an image and thus a clip, of a sample generated by a charged particle assessment device. It will be seen that the sample inspected has a repeating pattern of features with a unit cell of size indicted by the dimensions ShiftX and ShiftY.

The reference image generator 503 may be operable in one or more modes, each mode representing a different approach to generation of the reference image.

In a library mode, the reference image generator 503 averages a large number of source images obtained from previous scans of patterns nominally the same as the pattern currently being assessed. Such images may have been generated earlier in the same batch of samples, or from samples in previous batches. The library images may be derived from test samples or production samples. Before averaging the images are desirably aligned with one another. Averaging the source images to generate the reference image has the effect of reducing noise. Averaging the source images in this way also averages away any defects that might be visible in the source images.

In the case where the pattern being inspected is a repeating pattern, as shown for example in **Fig. 11****,** it is possible to generate the reference image by averaging a plurality of shifted versions of a source image. Each version of the source image is shifted by integer multiples of ShiftX and/or ShiftY. If either or both dimensions of the unit cell are not equal to an integer number of pixels, the shift amount can be rounded to the nearest pixel or a fractional pixel shift can be effected by linear interpolation. Another possibility is to shift by a multiple of the pitch of the repeating pattern such that the multiple is an integer number of pixels. In effect, multiple instances of the unit cell are extracted from the source image and averaged. This approach may be referred to as an example of array mode.

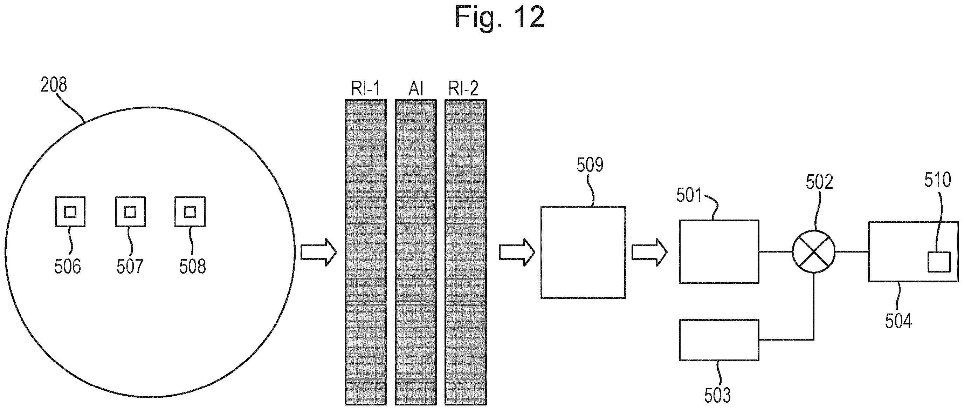

In a die-to-die mode, illustrated in **Fig. 12****,** three columns 506, 507, 508 of a multi-column charged particle assessment device are used to generate a sample image AI and two reference images RI-1, RI-2. An image aligner 509 is provided to align the images before they are supplied to the reference image generator 503 and filter module 501 as appropriate. This arrangement is particularly efficient where the spacing between columns 506, 507, 508 is equal to the die size of the sample being inspected since the columns 506, 507, 508 will then automatically scan corresponding pattern features simultaneously. In case there is a difference between the column spacing and die size, a buffer may be employed to correct the timing of image input to the data processing device.

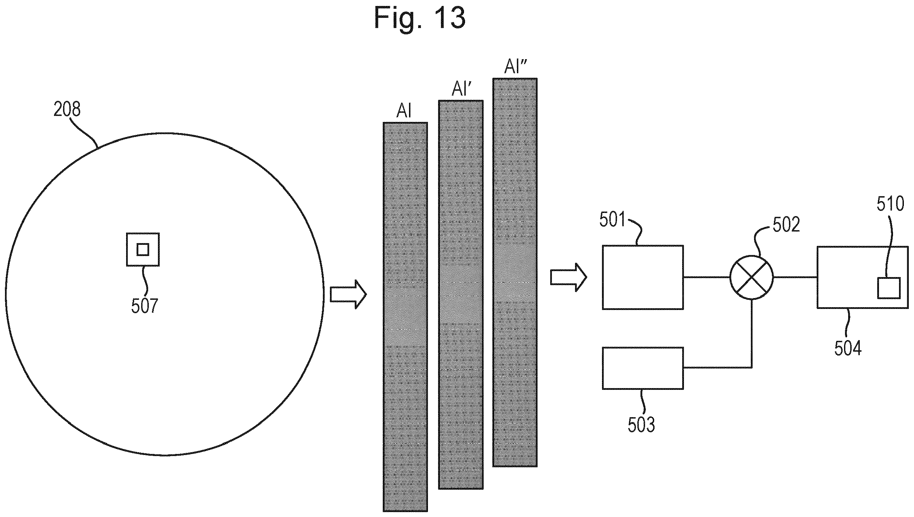

**Fig. 13** depicts an alternative version of array mode in which a single column 507, e.g. of a single-column system, provides a sample image AI which is compared against a reference image derived from two shifted versions of itself AI' and AI" as source images. A buffer may be used to provide the shifted images. Other than the features explicitly mentioned here, the features with references common to **Fig. 12** are similar if not the same as in the arrangement depicted in and described with reference to **Fig. 12****.**

It should be noted that it is also possible to apply the uniform filter to the source images and/or the reference images, in particular where the reference image is derived from a small number of source images that are obtained concurrently with the source image.

With reference again to **Fig. 9****,** comparator 502 may be any logic circuit capable of comparing two values, for example an XOR gate or a subtractor. Comparator 502 is also suitable for implementation by dedicated hardware, e.g. an FPGA or an ASIC. Such dedicated hardware can be more efficient and economic than programmed general purpose computing devices, e.g. CPUs. Desirably, comparator 502 is implemented on the same dedicated hardware as filter module 501.

In some cases, the reference image generator 503 can also be implemented in dedicated hardware, especially where the reference image generator operates only in a mode where the reference image is generated from a small number of, e.g. two, source images. In that case it is desirable that the reference image generator is implemented in the same dedicated hardware as the comparator and/or filter module. The mathematical operations to average pixels of source images and compare to a pixel of a sample image can, in suitable cases, be combined into a single logic circuit.

Output module 504 receives the results output by comparator 502 and prepares output to the user or other fab systems. The output may be in any of several different forms. In a simplest option, the output may simply be an indication that the sample has or does not have a defect. However, since almost all samples will have at least one potential defect more detailed information is desirable. Therefore the output may comprise, for example, a map of defect locations, a difference image, and/or information as to the severity of a possible defect represented by the magnitude of the difference between the sample image and the reference image. Output module 504 may also filter the potential defects, e.g. by only outputting defect locations where the magnitude of the difference between the sample image and the reference is greater than a threshold or the density of pixels showing a difference is higher than a threshold. Another possibility is to output only a predetermined number of most serious defect sites, indicated by the magnitude of the difference. This may be effected by storing defect sites in a buffer 510 and, when the buffer is full, overwriting the lowest magnitude defect if a higher magnitude defect is detected.

Any suitable format for the output of defect information may be used, e.g. a list or a map. Desirably, output module 504 may output clips, that is images of regions of the sample where potential defects have been detected. This allows the potential defect to be further examined to determine if the defect is real and serious enough to affect operation of the device formed on or present in the sample. The rest of the source image, i.e. those parts not saved as clips, may be discarded to save on data storage and transfer requirements.

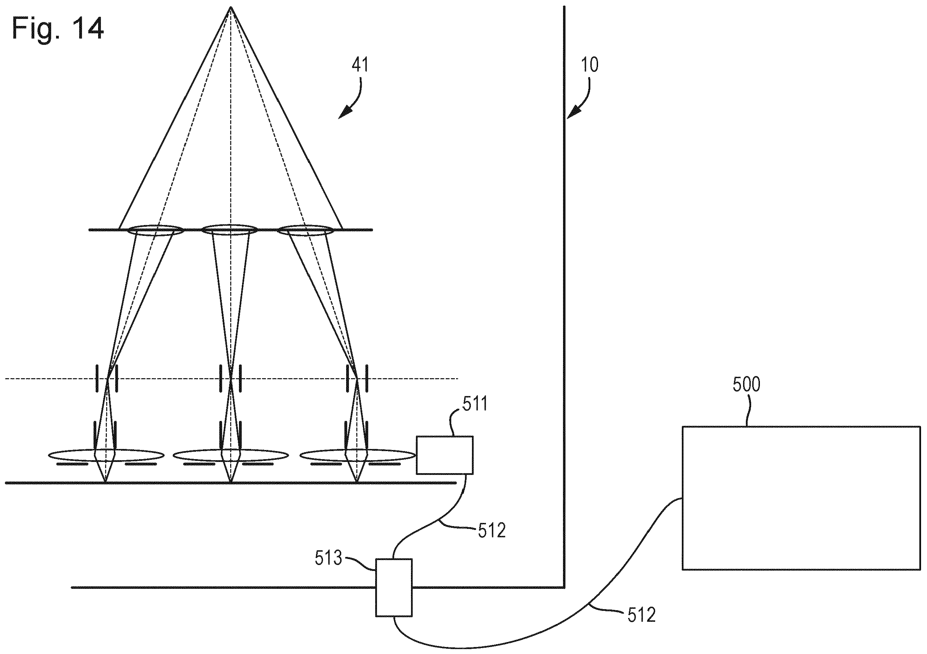

An example of a charged particle inspection system incorporating a single-column electron optical system and a data processing system is depicted in **Fig. 14****.** Electron optical system 41 is located within main chamber 10 and may be any one of the electron optical systems 41 to 41''' described above. An optical transceiver 511 is located near the detector module 240 of the electron optical system 41 and is configured to convert the electrical signals output by the detector module 240 to optical signals for transmission along optical fiber 512. Optical fiber 512 may be capable of transmitting multiple channels simultaneously (e.g. using different wavelengths) and the detection signals from each individual electrode of the detector module are converted into an appropriate number of data streams. Multiple optical fibers 512, either single channel or multi-channel, can be used. Optical fiber 512 is passed through the wall of main chamber 10 (inside of which is at vacuum in use) by vacuum feedthrough 513. A suitable vacuum feedthrough is described in US 2018/0182514 A1 which document is incorporated herein by reference at least insofar as it relates to a feedthrough device. Optical fiber 512 is connected to data processing device 500, which can therefore be located outside the vacuum for ease of access and to avoid needing to increase the size of the vacuum chamber to accommodate the data processing device. However, as the data processing device may compromise simplified dedicated processors such as FGPAs, an element or component of the data processing device 500 could be located within the column prior to optical conversion by the optical transceiver. The components of the data processing device may be distributed between the detector module 240 and the location of the data processing device 500 as depicted in **Fig. 14****.** Such a data processing architecture within the data path enables simple operations to be implemented closer to the data source, such as the detector. This is beneficial for implementing operations that reduce the data-rate. Implemeting such operations as close to the data source and/or in the data stream helps reduce the data rate in the data path, and for example also the load on the data path. Implementation may be easier for simpler operations requiring less complex processors. Such a simple operation that reduces the data rate is a an averaging operation such as "binning", or "quantising" or "re-quantising".

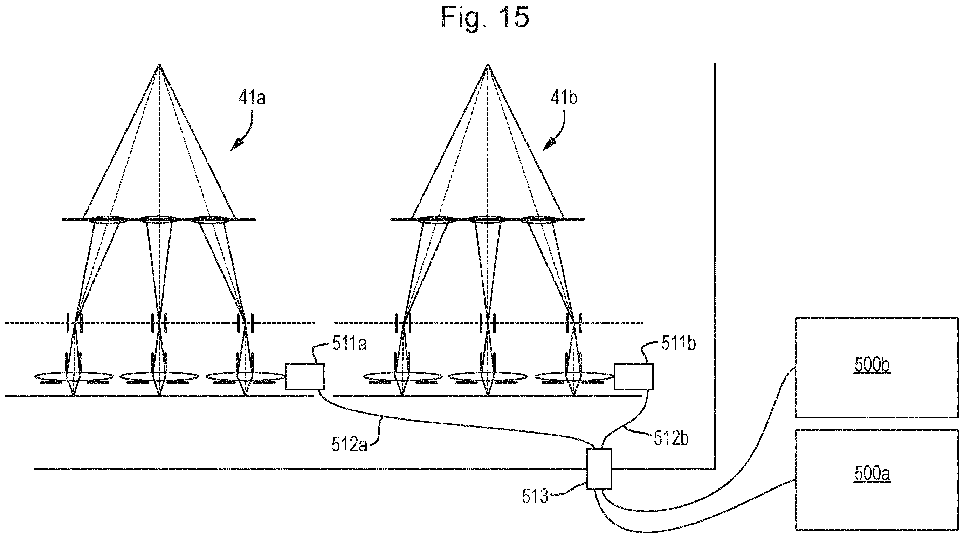

An example of a charged particle inspection system incorporating a multi-column electron optical system and a data processing system is depicted in **Fig. 15****.** Electron-optical systems 41a, 41b are located within main chamber 10. Each of electron optical systems 41a, 41b may be any one of the electron optical systems 41 to 41'" described above. Two columns are depicted but there may be many more, as discussed above. Each column has a respective optical transceiver 511a, 511b, optical fiber 512a, 512b and data processing device 500a, 500b. A single vacuum feedthrough 513 can be used to pass multiple optical fibers out of vacuum but in some cases, e.g. to simplify routing of fibers, multiple vacuum feedthroughs 513 may be employed. As described with reference to data processing device 500 of **Fig. 14****,** the data processing devices 500a, 500b may be distributed data processing arrangements with at least one component in the data signal path prior to conversion to optical signal by respective optical transceivers 511a, 511b.

In both single-column and multi-column systems, multiple optical transceivers and multiple optical fibers per column may be used if convenient.

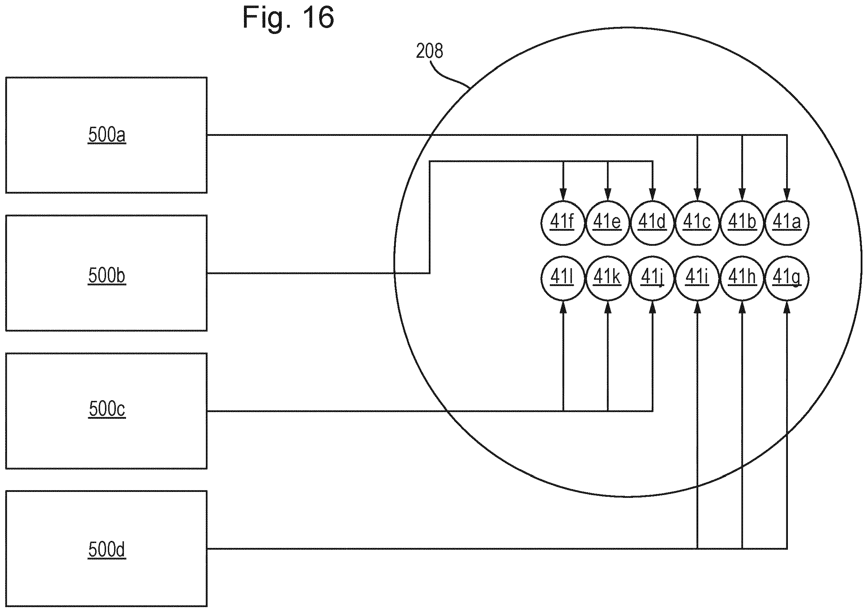

In a multi-column system, it is desirable to minimize the amount of data that has to be transferred from detectors to data processing units since the data volumes are very high. **Fig. 16** shows a data architecture optimized for the data processing approach where a sample image is compared to a reference image derived from two source images. As depicted, each data processing device 500a to 500d is connected to a group of electron optical system 41a to 41k. for example three of the electron-optical systems 41a to 41k which can supply three images to be used as the sample image and the two source images, in the desired combinations. As depicted the three electron-optical systems connected to one data processing device are adjacent, and thus imaging adjacent dies on sample 208, however it is also possible to have each data processing device connected to spatially separate electron-optical columns. This may be advantageous in reducing the probability that the same systematic error affects the dies imaged for source images and the die imaged for the sample image at the cost of slightly more complex fiber routing. Of course, if more than two source images are used for generating the reference image each data processing device will be connected to more than three electron-optical columns. In the same way as described above with reference to **Fig. 14****,** the data processing devices may be distributed so that at least one component of the processing device may be in the columns prior to conversion of detection signals to optical signals. If any components of a data processing devices 500a - 500d are in a column of a group of electron systems then all columns the group have similar components of the processing device.

References to upper and lower, up and down, above and below, etc. should be understood as referring to directions parallel to the (typically but not always vertical) up-beam and down-beam directions of the electron beam or multi-beam impinging on the sample 208. Thus, references to up beam and down beam are intended to refer to directions in respect of the beam path independently of any present gravitational field.

The embodiments herein described may take the form of a series of aperture arrays or electron-optical elements arranged in arrays along a beam or a multi-beam path. Such electron-optical elements may be electrostatic. In an embodiment all the electron-optical elements, for example from a beam limiting aperture array to a last electron-optical element in a sub-beam path before a sample, may be electrostatic and/or may be in the form of an aperture array or a plate array. In some arrangements one or more of the electron-optical elements are manufactured as a microelectromechanical system (MEMS) (i.e. using MEMS manufacturing techniques). Electron-optical elements may have magnetic elements and electrostatic elements. For example, a compound array lens may feature a macro magnetic lens encompassing the multi-beam path with an upper and lower pole plate within the magnetic lens and arranged along the multi-beam path. In the pole plates may be an array of apertures for the beam paths of the multi-beam. Electrodes may be present above, below or between the pole plates to control and optimize the electro-magnetic field of the compound lens array.

An assessment tool or assessment system according to the disclosure may comprise apparatus which makes a qualitative assessment of a sample (e.g. pass/fail), one which makes a quantitative measurement (e.g. the size of a feature) of a sample or one which generates an image of map of a sample. Examples of assessment tools or systems are inspection tools (e.g. for identifying defects), review tools (e.g. for classifying defects) and metrology tools, or tools capable of performing any combination of assessment functionalities associated with inspection tools, review tools, or metrology tools (e.g. metro-inspection tools).

Reference to a component or system of components or elements being controllable to manipulate a charged particle beam in a certain manner includes configuring a controller or control system or control unit to control the component to manipulate the charged particle beam in the manner described, as well optionally using other controllers or devices (e.g. voltage supplies) to control the component to manipulate the charged particle beam in this manner. For example, a voltage supply may be electrically connected to one or more components to apply potentials to the components, such as to the electrodes of the control lens array 250 and objective lens array 241, under the control of the controller or control system or control unit. An actuatable component, such as a stage, may be controllable to actuate and thus move relative to another components such as the beam path using one or more controllers, control systems, or control units to control the actuation of the component.

Functionality provided by the controller or control system or control unit may be computer-implemented. Any suitable combination of elements may be used to provide the required functionality, including for example CPUs, RAM, SSDs, motherboards, network connections, firmware, software, and/or other elements known in the art that allow the required computing operations to be performed. The required computing operations may be defined by one or more computer programs. The one or more computer programs may be provided in the form of media, optionally non-transitory media, storing computer readable instructions. When the computer readable instructions are read by the computer, the computer performs the required method steps. The computer may consist of a self-contained unit or a distributed computing system having plural different computers connected to each other via a network.

The terms "sub-beam" and "beamlet" are used interchangeably herein and are both understood to encompass any radiation beam derived from a parent radiation beam by dividing or splitting the parent radiation beam. The term "manipulator" is used to encompass any element which affects the path of a sub-beam or beamlet, such as a lens or deflector. References to elements being aligned along a beam path or sub-beam path are understood to mean that the respective elements are positioned along the beam path or sub-beam path. References to optics are understood to mean electron-optics.

The methods of the present invention may be performed by computer systems comprising one or more computers. A computer used to implement the invention may comprise one or more processors, including general purpose CPUs, graphical processing units (GPUs), Field Programmable Gate Arrays (FPGAs), Application Specific Integrated Circuits (ASICs) or other specialized processors. As discussed above, in some cases specific types of processor may provide advantages in terms of reduced cost and/or increased processing speed and the method of the invention may be adapted to the use of specific processor types. Certain steps of methods of the present invention involve parallel computations that are apt to be implemented on processers capable of parallel computation, for example GPUs.

The term "image" used herein is intended to refer to any array of values wherein each value relates to a sample of a location and the arrangement of values in the array corresponds to a spatial arrangement of the sampled locations. An image may comprise a single layer or multiple layers. In the case of a multi-layer image, each layer, which may also be referred to as a channel, represents a different sample of the locations. The term "pixel" is intended to refer to a single value of the array or, in the case of a multi-layer image, a group of values corresponding to a single location.

A computer used to implement the invention may be physical or virtual. A computer used to implement the invention may be a server, a client or a workstation. Multiple computers used to implement the invention may be distributed and interconnected via a local area network (LAN) or wide area network (WAN). Results of a method of the invention may be displayed to a user or stored in any suitable storage medium. The present invention may be embodied in a non-transitory computer-readable storage medium storing instructions to carry out a method of the invention. The present invention may be embodied in computer system comprising one or more processors and memory or storage storing instructions to carry out a method of the invention.

Aspects of the invention are set out in the following numbered clauses.
Clause 1: A data processing device for detecting defects in sample images generated by a charged particle assessment system, the device comprising:
   an input module configured to receive a sample image from the charged particle assessment system;
   a filter module configured to apply a filter to the sample image to generate a filtered sample image;
   a reference image module configured to provide a reference image based on one or more source images; and a comparator configured to compare the filtered sample image to the reference image so as to detect defects in the sample image.
Clause 2: A device according to clause 1 wherein the filter module is configured to perform a convolution between the sample image and a kernel.
Clause 3: A device according to clause 2 wherein the kernel is a uniform kernel.
Clause 4: A device according to clause 2 or 3 wherein the uniform kernel has a dimension that is a non-integer number of pixels, e.g. in the range of 1.1 to 5 pixels, desirably in the range of 1.4 to 3.8 pixels.
Clause 5: A device according to clause 1, 2, 3 or 4 wherein the reference image is configured to generate a reference image by averaging a plurality of source images.
Clause 6: A device according to clause 5 wherein the source images include images selected from one or more of: a library of images of previously inspected samples; images of different dies on the sample; and shifted versions of the sample image.
Clause 7: A device according to clause 1, 2, 3 or 4 wherein the reference image is a synthetic image generated from design data describing a structure on the sample.
Clause 8: A device according to any one of the preceding clauses wherein at least one of the filter module and the comparator comprise a field programmable gate array or an application-specific integrated circuit.
Clause 9: A device according to any one of the preceding clauses wherein the comparator outputs a difference value for each pixel, the difference value representing the magnitude of the difference between that pixel and the corresponding pixel of the reference image; and further comprising a selection module configured to select selected pixels, the selected pixels being a subset of the pixels meeting a criterion, for further processing,
Clause 10: A device according to clause 9 wherein the selection module is configured to select a region of pixels surrounding each selected pixel.
Clause 11: A device according to clause 9 or 10, wherein the criterion is that selected pixels have a difference value greater than a threshold.
Clause 12: A device according to clause 9 or 10, wherein the criterion to select pixels is to select a predetermined number of pixels having highest difference values.
Clause 13: A device according to clause 9 or 10, wherein the selection module comprises a buffer and the selection module is configured to process pixels of the source image sequentially, storing pixels having a difference value greater than a threshold in the buffer and, when the buffer is full, if a newly processed pixel has a difference value greater than the pixel in the buffer having the lowest difference value, to overwrite the pixel in the buffer having the lowest difference value with the newly processed pixel, and, when a region of pixels surrounding the selected pixel is selected by the selection module, the region of pixels associated with the newly processed pixel is stored in the buffer by overwriting the region of pixels associated with the pixel overwritten by the newly processed pixel.
Clause 14: A charged particle assessment system comprising a charged particle beam system and a data processing device according to any one of the preceding clauses.
Clause 15: A charged particle assessment system according to clause 14 wherein the charged beam system is a single column beam system.
Clause 16: A charged particle assessment system according to clause 14 wherein the charged particle beam system is a multi-column beam system.
Clause 17: A charged particle assessment system according to clause 16 wherein a first column of the multi-column beam system is configured to provide the sample image to the input module and a plurality of second columns of the multi-column beam system are configured to provide source images to the reference image module .
Clause 18: A charged particle assessment system according to clause 16 wherein there are a plurality of data processing devices and each data processing devices is associated with a respective one of the columns of the multi-column beam system so that each data processing device is configured to receive a sample image from the respective one of the columns and to receive source images from other columns of the multi-column tool.
Clause 19: A charged particle assessment system comprising a charged particle beam system and a plurality of data processing devices for detecting defects in sample images generated by the charged particle beam system, wherein the charged particle beam system comprises multiple-columns and each data processing device is associated with a respective one of the columns of the multiple-columns so that each data processing device is configured to receive a sample image from the respective one of the columns and to receive source images from one or more other columns .
Clause 20: A method of detecting defects in sample images generated by a charged particle beam system, the method comprising: receiving a sample image from the charged particle beam system; applying a filter to the sample image to generate a filtered sample image;
   providing a reference image based on at least one source image; and comparing the filtered sample image to the reference image so as to detect defects in the sample image.
Clause 21: A method according to clause 20 wherein the sample has formed thereon a plurality of repeated patterns spaced apart at a pitch; and the method further comprises: using a first column of a multi-column beam system to obtain the sample image of the sample, the multi-column beam system having a plurality of columns that are spaced apart at the pitch; using a plurality of other columns of the multi-column beam system to obtain a plurality of source images; and averaging the source images to obtain the reference image.
Clause 22: A method according to clause 20 or 21 wherein applying a filter comprises performing a convolution between the sample image and a kernel.
Clause 23: A method according to clause 22 wherein the kernel is a uniform kernel.
Clause 24: A method according to clause 22 or 23 wherein the uniform kernel has a dimension that is a non-integer number of pixels, e.g. in the range of 1.1 to 5 pixels, desirably in the range of 1.4 to 3.8 pixels.
Clause 25: A method according to any one of clauses 20 to 24 wherein providing a reference image comprises averaging a plurality of source images.
Clause 26: A method according to clause 25 wherein the source images include images selected from one or more of: a library of images of previously inspected samples; images of different dies on the sample; and shifted versions of the sample image.
Clause 27: A method according to any one of clauses 20 to 24 wherein the reference image is a synthetic image generated from design data describing a structure on the sample.
Clause 28: A method according to any one of clauses 20 to 27 wherein at least one of the applying a filter and the comparing are performed using a field programmable gate array or an application-specific integrated circuit.
Clause 29: A method according to any one of clauses 20 to 28 wherein the comparing comprises determining a difference value for each pixel, the difference value representing the magnitude of the difference between that pixel and the corresponding pixel of the reference image, and further comprising selecting selected pixels, the selected pixels being a subset of the pixels meeting a criterion, for further processing.
Clause 30: A method according to clause 29 wherein the selecting comprises selecting a region of pixels surrounding each pixel meeting the criterion.
Clause 31: A method according to clause 29 or 30 wherein the criterion is that selected pixels have a difference value greater than a threshold.
Clause 32: A method according to clause 29 or 30 wherein the criterion to select pixels is to select a predetermined number of pixels having highest difference values.
Clause 33: A method according to clause 29 or 30 wherein the selecting comprises process pixels of the source image sequentially and storing pixels having a difference value greater than a threshold in a buffer and, when the buffer is full, if a newly processed pixel has a difference value greater than the pixel in the buffer having the lowest difference value, overwriting the pixel in the buffer having the lowest difference value with the newly processed pixel; and, when a region of pixels surrounding the selected pixel is selected, the region of pixels associated with the newly processed pixel is stored in the buffer by overwriting the region of pixels associated with the pixel overwritten by the newly processed pixel.

While the present invention has been described in connection with various embodiments, other embodiments of the invention will be apparent to those skilled in the art from consideration of the specification and practice of the invention disclosed herein. It is intended that the specification and examples be considered as exemplary only, with a true scope and spirit of the invention being indicated by the following claims.

## Claims

1. A method of detecting defects in sample images generated by a charged particle beam system, the method comprising:
receiving a sample image from the charged particle beam system;
applying a filter to the sample image to generate a filtered sample image;
providing a reference image based on at least one source image; and
comparing the filtered sample image to the reference image so as to detect defects in the sample image.

2. A method according to claim 1 wherein the sample has formed thereon a plurality of repeated patterns spaced apart at a pitch; and the method further comprises:
using a first column of a multi-column beam system to obtain the sample image of the sample, the multi-column beam system having a plurality of columns that are spaced apart at the pitch;
using a plurality of other columns of the multi-column beam system to obtain a plurality of source images; and
averaging the source images to obtain the reference image.

3. A method according to claim 1 or 2 wherein applying a filter comprises performing a convolution between the sample image and a kernel.

4. A method according to claim 3 wherein the kernel is a uniform kernel.

5. A method according to claim 3 or 4 wherein the uniform kernel has a dimension that is a non-integer number of pixels, e.g. in the range of 1.1 to 5 pixels, desirably in the range of 1.4 to 3.8 pixels.

6. A method according to any of the preceding claims wherein providing a reference image comprises averaging a plurality of source images.

7. A method according to claim 6 wherein the source images include images selected from one or more of: a library of images of previously inspected samples; images of different dies on the sample; and shifted versions of the sample image.

8. A method according to any of claims 1 to 5 wherein the reference image is a synthetic image generated from design data describing a structure on the sample.

9. A method according to any of the preceding claimswherein at least one of the applying a filter and the comparing are performed using a field programmable gate array or an application-specific integrated circuit.

10. A method according to any of the preceding claims wherein the comparing comprises determining a difference value for each pixel, the difference value representing the magnitude of the difference between that pixel and the corresponding pixel of the reference image, and further comprising selecting selected pixels, the selected pixels being a subset of the pixels meeting a criterion, for further processing.

11. A method according to claim 10 wherein the selecting comprises selecting a region of pixels surrounding each pixel meeting the criterion.

12. A method according to claim 10or 11 wherein the criterion is that selected pixels have a difference value greater than a threshold.

13. A method according to claim 10 or 11 wherein the criterion to select pixels is to select a predetermined number of pixels having highest difference values.

14. A method according to claim 10 or 11 wherein the selecting comprises process pixels of the source image sequentially and storing pixels having a difference value greater than a threshold in a buffer and, when the buffer is full, if a newly processed pixel has a difference value greater than the pixel in the buffer having the lowest difference value, overwriting the pixel in the buffer having the lowest difference value with the newly processed pixel; and, when a region of pixels surrounding the selected pixel is selected, the region of pixels associated with the newly processed pixel is stored in the buffer by overwriting the region of pixels associated with the pixel overwritten by the newly processed pixel.

15. A data processing device for detecting defects in sample images generated by a charged particle assessment system, the device comprising:
an input module configured to receive a sample image from the charged particle assessment system;
a filter module configured to apply a filter to the sample image to generate a filtered sample image;
a reference image module configured to provide a reference image based on one or more source images; and a comparator configured to compare the filtered sample image to the reference image so as to detect defects in the sample image.
